# EUROPEAN PATENT APPLICATION

(11) **EP 4 799 964 A1**
(43) Date of publication of application: **02.09.2026**
(21) Application number: 25221703.9
(22) Date of filing: 09.12.2025
(51) Int. Cl.: B65H 1/14, B65H 1/04

(54) **CONVEYING DEVICE, CORRESPONDING IMAGE READING DEVICE, CORRESPONDING IMAGE FORMING APPARATUS, AND CONVEYING METHOD**

(30) Priority: 27.02.2025 JP 2025030356
(71) Applicant: ETRIA Co., Ltd., Yokohama, Kanagawa 220-0011 (JP)
(72) Inventor: HASHIMOTO, Ayumu, Kanagawa, 220-0011 (JP); KUBO, Hiroshi, Kanagawa, 220-0011 (JP); TAKAI, Shinya, Kanagawa, 220-0011 (JP)
(74) Representative: SSM Sandmair

(57) **Abstract**

A conveying device (102) includes a stacker (41), a conveyor (41), a feeder (61, 62, 63), an operation interface (90), an actuator (41a), and a mode switching unit (170). The actuator (41a) moves, in response to a receipt of the switching operation by the operation interface (90), the stacker between: a first position where the object on the stacker (41) is at a feedable position (61, 62, 63) by the feeder; and a second position where the object on the stacker (41) is at a non-feedable position by the feeder, the non-feedable position below the first position. The mode switching unit (170) is configured to switch between: a first mode to move the stacker (41) from the second position to the first position when the object is stacked on the stacker (41); and a second mode to move the stacker (41) from the second position to the first position when the operation interface (90) receives starting of conveying the object.

## Description

### BACKGROUND

### Technical Field

The present disclosure relates to a conveying device, an image reading device, an image forming apparatus, and a conveyance method.

### Related Art

Image reading devices in the related art read each of multiple different-sized documents stacked (placed) on a stacking portion while conveying the multiple documents. To facilitate the work of placing different-sized documents on the stacking portion and adjusting the positions of the individual documents, such image reading devices have a position changing mode in which the position of the stacking portion is not changed to a sheet feeding position in response to placement of the documents.

Japanese Unexamined Patent Application Publication No. 2021-187590 discloses a technique for moving the position of a stacking portion. When a user selects a read mode for reading multiple different-sized documents placed on the stacking portion, the stacking portion is moved to a second position that is below a first position for feeding the documents (i.e., a sheet feeding position) and is not moved to the sheet feeding position until a sheet feeding start instruction is given.

In the related art, however, an operation panel for setting various modes of the image reading devices is located at a position apart from the stacking portion. For this reason, the user sometimes places documents, which are conveyance target objects, on the stacking portion before selecting the position changing mode and the read mode. This hinders facilitation of the placing work because the position of the stacking portion is changed to the sheet feeding position once the documents are placed on the stacking portion.

### SUMMARY

The present disclosure described herein provides a conveying device includes a stacker, a conveyor, a feeder, an operation interface, an actuator, and a mode switching unit. The stacker stacks an object to be conveyed. The conveyor conveys the object in a conveyance direction. The feeder feeds the object on the stacker to the conveyor. The operation interface is disposed in vicinity of the stacker to receive a switching operation to move the stacker. The actuator moves, in response to a receipt of the switching operation by the operation interface, the stacker between: a first position where the object on the stacker is at a feedable position by the feeder; and a second position where the object on the stacker is at a non-feedable position by the feeder, the non-feedable position below the first position. The mode switching unit is configured to perform the switching operation, in response to the receipt of the switching operation by the operation interface, to switch a mode of the actuator between: a first mode to move the stacker from the second position to the first position when the object is stacked on the stacker; and a second mode to move the stacker from the second position to the first position when the operation interface receives starting of conveying the object.

The present disclosure described herein provides a conveying method to be executed by a conveying device, the conveying method includes performing a switching operation, in response to a receipt of the switching operation by an operation interface disposed in vicinity of a stacker, to switch a mode of an actuator that moves the stacker, between a first mode to move the stacker from a second position to a first position when the object is stacked on the stacker and a second mode to move the stacker from the second position to the first position when the operation interface receives starting of conveying the object. The first position is where the object on the stacker is at a feedable position by a feeder; and the second position is where the object on the stacker is at a non-feedable position by the feeder, the non-feedable position below the first position.

Embodiments of the present disclosure facilitate the placing work when conveyance target objects are placed on a stacking portion.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic cross-sectional view of an image forming apparatus according to a first embodiment of the present disclosure;
FIG. 2 is a schematic cross-sectional view of a scanner of the image forming apparatus illustrated in FIG. 1;
FIG. 3 is a schematic cross-sectional view of an automatic document feeder (ADF) of the image forming apparatus illustrated in FIG. 1;
FIG. 4 is a block diagram illustrating an example of a hardware configuration of the image forming apparatus;
FIG. 5 is a diagram illustrating an example of functional blocks of the ADF according to the first embodiment;
FIGs. 6A and 6B are cross-sectional views of the ADF as viewed from a side;
FIG. 7A and 7B are diagrams illustrating an example in which multiple different-sized documents are placed;
FIG. 8 is an external view of the ADF as viewed obliquely from above;
FIGs. 9A and 9B are views of a document tray of the ADF as viewed directly from above;
FIGs. 10A and 10B are external views of the ADF including a document presser, as viewed obliquely from above;
FIG. 11 is a flowchart illustrating an example of a procedure of a document conveyance process according to the first embodiment;
FIG. 12 is a diagram illustrating an example of functional blocks of an ADF according to a second embodiment of the present disclosure;
FIG. 13 is a diagram illustrating an example of functional blocks of an ADF according to a third embodiment of the present disclosure;
FIG. 14 is a flowchart illustrating an example of a procedure of a document conveyance process according to the third embodiment;
FIG. 15 is a diagram illustrating an example of functional blocks of an ADF according to a fourth embodiment of the present disclosure;
FIG. 16 is a flowchart illustrating an example of a procedure of a document conveyance process according to the fourth embodiment;
FIG. 17 is a diagram schematically illustrating an example of a configuration for performing image processing according to a fifth embodiment of the present disclosure; and
FIG. 18 is a diagram schematically illustrating an example of a configuration for performing image correction processing according to a sixth embodiment of the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

A conveying device, an image reading device, an image forming apparatus, and a conveying method according to embodiments will be described below with reference to the accompanying drawings.

### First Embodiment

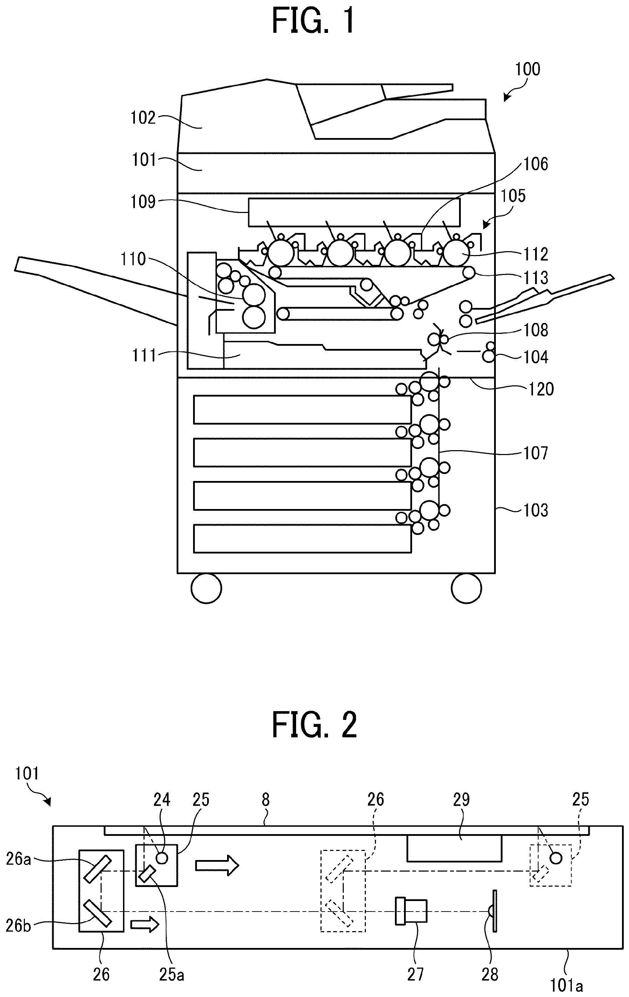

FIG. 1 is a schematic cross-sectional view of an image forming apparatus 100 according to a first embodiment of the present disclosure. The image forming apparatus 100 is, for example, a multifunction peripheral (MFP) having at least two functions among a copy function, a printer function, a scanner function, and a facsimile function.

As illustrated in FIG. 1, the image forming apparatus 100 includes a sheet feeder 103, an apparatus body 104, a scanner 101, and an ADF 102.

The image forming apparatus 100 includes a plotter 120 inside the apparatus body 104. The plotter 120 includes an image formation section 105 of a tandem system, registration rollers 108, an optical writing device 109, a fixing device 110, and a duplex tray 111. The registration rollers 108 feed a recording sheet from the sheet feeder 103 to the image formation section 105 along a conveyance path 107. The plotter 120 is an example of an image forming device.

The image formation section 105 includes four photoconductor drums 112 arranged side by side to correspond to four colors of yellow (Y), magenta (M), cyan (C), and key (or black) (K). Each of the photoconductor drums 112 is provided with image formation components therearound which include a charger, a developing device 106, a transfer device, a cleaner, and a charge neutralizer.

An intermediate transfer belt 113, stretched around a drive roller and a driven roller, is disposed in between the transfer devices and the respective photoconductor drums 112.

In the image forming apparatus 100 of the tandem system thus configured, the scanner 101 reads a document fed from the ADF 102 to obtain a read image. Based on the read image, the optical writing device 109 performs optical writing on the photoconductor drums 112 for the respective colors of Y, M, C, and K on a color-by-color basis to form respective latent images. The developing device 106 develops the latent images with toner of the respective colors to form respective toner images. The transfer device transfers the toner images onto the intermediate transfer belt 113 in order of Y, M, C, and K, for example (primary transfer). A full-color image in which four colors are superimposed together in the primary transfer is transferred onto a recording sheet supplied from the sheet feeder 103 (secondary transfer), and is fixed on the recording sheet by the fixing device 110. The recording sheet is then ejected. In this manner, the image forming apparatus 100 forms the full-color image on the recording sheet.

The scanner 101 will be described next.

FIG. 2 is a schematic cross-sectional view of the scanner 101. As illustrated in FIG. 2, the scanner 101 includes a first carriage 25, a second carriage 26, an imaging lens 27, an imager 28, and an operation panel 29.

The scanner 101 has a body frame 101a, inside which a first rail and a second rail extend in a sub-scanning direction (left-right direction in FIG. 2). The first rail includes two rails disposed with a predetermined space therebetween in a main-scanning direction perpendicular to the sub-scanning direction. The second rail has substantially the same configuration as the first rail.

The first carriage 25 is slidably attached to the first rail. The first carriage 25 is reciprocally movable in the sub-scanning direction between a position indicated by a solid line and a position indicated by a dash line in FIG. 2, by a drive motor via a first carriage drive wire. The first carriage 25 includes a light source 24 and a first mirror member 25a. The light source 24 is an example of a visible light source to emit visible light.

The second carriage 26 is slidably attached to the second rail. The second carriage 26 is reciprocally movable in the sub-scanning direction between a position indicated by a solid line and a position indicated by a dash line in FIG. 2, by a drive motor via a second carriage drive wire. The second carriage 26 includes a second mirror member 26a and a third mirror member 26b.

The first carriage 25 and the second carriage 26 move in the sub-scanning direction at a speed ratio of 2:1. With such a relationship between the moving speeds, an optical path length of light from the document surface to the imaging lens 27 is kept constant even when the first carriage 25 and the second carriage 26 move.

The imaging lens 27 focuses light, which has been incident onto the document through the mirror members and reflected from the document, onto the imager 28 to form an image on the imager 28. The imager 28 includes, for example, charge coupled device (CCD) imaging elements and reads a document in full-color. The imager 28 includes, for example, sensors (linear image sensors) of three colors of red (R), green (G), and blue (B). The imager 28 performs photoelectric conversion on a reflected light image of the document formed through the imaging lens 27, and outputs an analog image signal. The imager 28 is an example of a visible light sensor to detect the visible light.

The operation panel 29 includes a touch panel, for example. The touch panel displays current setting values of an image reading device including the scanner 101 and receives an input of setting values and an image reading start instruction (e.g., scan start instruction or copy start instruction) from a user. The touch panel receives a touch input from the user. The user can perform operations such as inputting a numerical value into an input box, selecting an item from a pull-down menu, and switching on/off a check box displayed on the screen using, for example, a finger or a pen. The operation panel 29 may include an input device such as a numeral keypad, a trackball, or a touch pad.

The scanner 101 outputs a read image obtained by digitizing the analog image signal output by the imager 28. Data of the read image is full-color image data in which each pixel includes R data, G data, and B data, for example. Such image data may be hereinafter referred to as an image.

The ADF 102 mounted on the scanner 101 will be described next. The ADF 102 is an example of a conveying device.

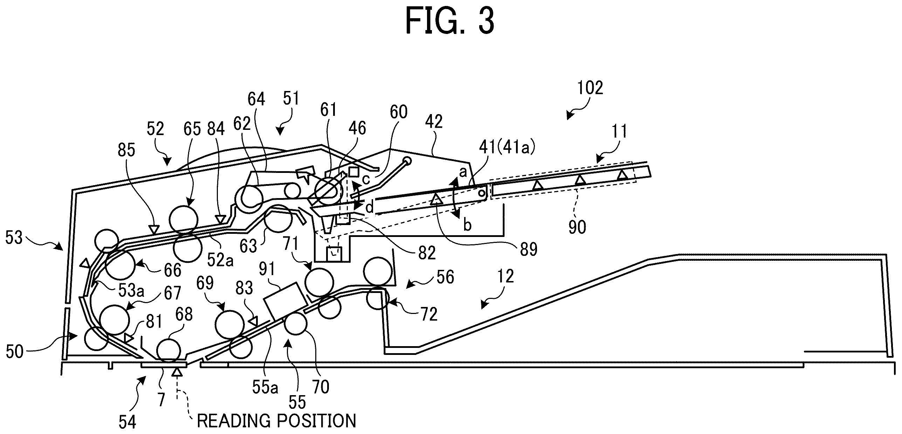

FIG. 3 is a schematic cross-sectional view of the ADF 102. As illustrated in FIG. 3, the ADF 102 includes a document tray 11 on which a document is placed. The document tray 11 includes a movable document table 41 and a pair of side guide plates 42. The movable document table 41 rotates about a proximal end thereof in directions indicated by arrows a and b in FIG. 3. The pair of side guide plates 42 aligns the document laterally with respect to the direction in which the document is fed (conveyance direction). With the rotation of the movable document table 41, the leading edge of the document in the document feeding direction is adjusted to an appropriate height. A document is an example of a conveyance target object, which is simply referred to as an object to be conveyed. The movable document table 41 is an example of a stacking portion on which a conveyance target object is placed.

The document tray 11 includes a main-scanning sensor 89 and a sub-scanning sensor 90. The main-scanning sensor 89 detects the width of a document (document width) that is the dimension of the document in a direction (main-scanning direction) perpendicular to the conveyance direction. The sub-scanning sensor 90 detects the length of the document (document length) that is the dimension of the document in the conveyance direction (sub-scanning direction). The sub-scanning sensor 90 is an example of a sensor to detect a length of the conveyance target object.

The main-scanning sensor 89 is a sensor array including multiple sensors spaced apart from each other in the main-scanning direction. The sub-scanning sensor 90 is a sensor array including multiple sensors spaced apart from each other in the sub-scanning direction. Examples of the main-scanning sensor 89 and the sub-scanning sensor 90 include reflective sensors that optically perform detection in a non-contact manner, and contact actuator-type sensors. In an embodiment, the sub-scanning sensor 90 includes fewer than 3 sensors. In another embodiment, the sub-scanning sensor 90 includes more than 3 sensors.

The pair of side guide plates 42 is slidable in the main-scanning direction to allow various-sized documents to be placed on the document tray 11.

The pair of side guide plates 42 is provided with, on the fixed side thereof, a set feeler 46 that rotates in response to placement of a document. A document placement sensor 82 is provided at the lowermost position on a movement trajectory of the tip of the set feeler 46 to detect placement of a document on the document tray 11. That is, the document placement sensor 82 detects whether a document is placed on the ADF 102 based on whether the set feeler 46 rotates to be separate from the document placement sensor 82.

The ADF 102 includes a conveyor 50 including a document separating and feeding section 51, a pullout section 52, a turn section 53, a first reading and conveying section 54, a second reading and conveying section 55, and a document ejecting section 56. The conveyor 50 includes conveyance rollers that are driven to rotate by one or more conveyance motors.

The document separating and feeding section 51 includes a pickup roller 61, a document feed belt 62, and a reversing roller 63. The pickup roller 61 is disposed in the vicinity of a document feed port 60 from which a document is fed. The document feed belt 62 and the reversing roller 63 are disposed to face each other with a conveyance path therebetween.

The pickup roller 61 is supported by a support arm member 64 attached to the document feed belt 62 to move up and down in directions indicated by arrows c and d in FIG. 3 via a cam mechanism between a contact position where the pickup roller 61 comes into contact with a document bundle and a separate position where the pickup roller 61 is separate from the document bundle. The document bundle includes one or more documents. Ideally, the pickup roller 61 picks up a single document from the document bundle placed on the document tray 11 at the contact position.

The document feed belt 62 rotates in the document feeding direction. The reversing roller 63 rotates in an opposite direction to the document feeding direction. When multiple documents are fed, the reversing roller 63 rotates in the opposite direction to the rotation direction of the document feed belt 62. When the reversing roller 63 is in contact with the document feed belt 62 or when a single document is fed, the reversing roller 63 rotates together with the document feed belt 62 by the action of a torque limiter. Consequently, multi-feed of documents is prevented. A document feeding mechanism including the pickup roller 61, the document feed belt 62, and the reversing roller 63 is an example of a feeder to feed a document.

The pullout section 52 includes pullout rollers 65 that are a pair of rollers disposed with a conveyance path 52a therebetween. The pullout section 52 performs primary edge alignment (so-called skew correction) on the document fed at driving timings of the pullout rollers 65 and the pickup roller 61, and pulls out and conveys the aligned document.

The turn section 53 includes a pair of intermediate rollers 66 and a pair of reading entrance rollers 67, each of which is disposed with a conveyance path 53a therebetween. The conveyance path 53a curves from top toward bottom. In the turn section 53, the intermediate rollers 66 convey the picked up and conveyed document along the curved conveyance path 53a to turn the document. The reading entrance rollers 67 convey the document to the vicinity of a slit glass 7, which is at a reading position, such that the front side of the document faces downward.

The document conveying speed from the pullout section 52 to the turn section 53 is set to be higher than the document conveying speed in the first reading and conveying section 54. This reduces the time taken to convey the document to the first reading and conveying section 54.

The first reading and conveying section 54 includes a first read roller 68 and first reading exit rollers 69. The first read roller 68 is disposed to face the slit glass 7. The first reading exit rollers 69 are located in a conveyance path 55a downstream of the reading. In the first reading and conveying section 54, the first read roller 68 conveys the document that has been conveyed to the vicinity of the slit glass 7, while keeping the front side of the document in contact with the slit glass 7. At this time, the scanner 101 reads the document at the reading position through the slit glass 7. At this time, the first carriage 25 and the second carriage 26 of the scanner 101 are stopped at the respective home positions. In the first reading and conveying section 54, the first reading exit rollers 69 further convey the document that has been read.

The second reading and conveying section 55 illustrated in FIG. 3 includes a second reader 91, a second read roller 70, and second reading exit rollers 71. The second reader 91 reads the back side of the document. The second read roller 70 is disposed to face the second reader 91 with the conveyance path 55a therebetween. The second reading exit rollers 71 are disposed downstream from the second reader 91 in the conveyance direction.

In the second reading and conveying section 55, the second reader 91 reads the back side of the document after the front side of the document is read. After the back side of the document is read, the second reading exit rollers 71 convey the document toward a document ejection port. The second read roller 70 functions to prevent or reduce floating of the document at the second reader 91 and also functions as a reference white area when the second reader 91 acquires shading data. When duplex reading is not performed on the document, the document just passes through the second reader 91.

The document ejecting section 56 is provided with a pair of document ejection rollers 72 in the vicinity of the document ejection port. The pair of document ejection rollers 72 ejects the document that has been conveyed by the second reading exit rollers 71, onto a document ejection tray 12.

The ADF 102 is provided with various sensors such as a contact sensor 84, a registration sensor 81, and a document ejection sensor 83 along the document conveyance path. The various sensors are used for conveyance control related to a document conveying distance and a document conveying speed, for example.

A document width sensor 85 is disposed between the pullout rollers 65 and the intermediate rollers 66. The length of the document in the conveyance direction is detected based on motor pulses in response to the contact sensor 84 and the registration sensor 81 reading the leading end and the trailing end of the document.

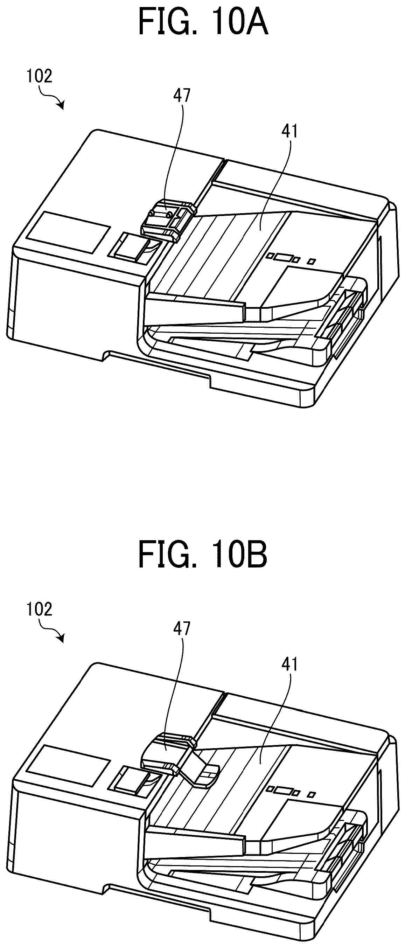

As described below, the ADF 102 may include a member (e.g., a document presser 47 illustrated in FIGs. 10A and 10B) for preventing or reducing the skew (tilt) of the document during conveyance.

A hardware configuration of the image forming apparatus 100 will be described next.

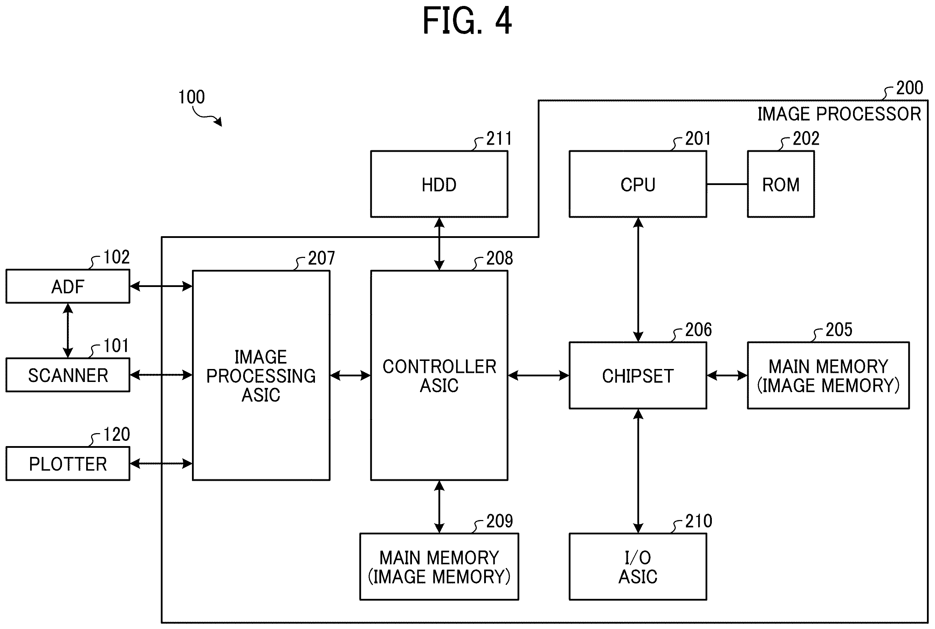

FIG. 4 is a block diagram illustrating an example of the hardware configuration of the image forming apparatus 100. As illustrated in FIG. 4, the image forming apparatus 100 includes the scanner 101, the ADF 102, the plotter 120, a hard disk drive (HDD) 211, and an image processor 200. The scanner 101, the ADF 102, and the image processor 200 are included in an image reading device.

The ADF 102 has a function of conveying a document to the scanner 101. The scanner 101 has a function of reading a document to obtain an image to be subjected to a copy process or an image to be output to an external interface. The plotter 120 has a function of printing an image on which image processing has been performed by the image processor 200.

The image processor 200 performs predetermined processing on a read image, which has been obtained by the scanner 101 through reading a document conveyed by the ADF 102, to generate an image, and outputs the generated image to the plotter 120. The image processor 200 includes a central processing unit (CPU) 201, a read-only memory (ROM) 202, a main memory 205, a chipset 206, an image processing ASIC 207, a controller ASIC 208, a main memory 209, and an input/output (I/O) ASIC 210. "ASIC" is an acronym for "application-specific integrated circuit".

The CPU 201 controls the image forming apparatus 100. The main memory 205 is used as a work area to which a program used by the CPU 201 to control the image forming apparatus 100 is deployed and as a memory (image memory) for temporarily storing image data or the like to be handled by the CPU 201. The chipset 206 is used together with the CPU 201 to control access to the main memory 205 from the controller ASIC 208 and the I/O ASIC 210.

The program executed by the image forming apparatus 100 according to the present embodiment may be recorded on and provided through a computer-readable recording medium such as a compact disc read-only memory (CD-ROM), a flexible disk (FD), a compact disc recordable (CD-R), or a digital versatile disc (DVD), in an installable or executable file format.

The program executed by the image forming apparatus 100 according to the present embodiment may be stored on a computer connected to a network such as the Internet and may be downloaded via the network and provided to the image forming apparatus 100. The program executed by the image forming apparatus 100 according to the present embodiment may be provided or distributed via a network such as the Internet.

The image processing ASIC 207 performs image processing on the read image obtained by the scanner 101 through reading, and outputs the processed image to the controller ASIC 208. The image processing ASIC 207 performs image processing on an image input from the controller ASIC 208 to make the image printable by the plotter 120 and transmits the image to the plotter 120 in accordance with a print timing of the plotter 120.

The controller ASIC 208 uses the main memory 205 via the chipset 206 to, for example, rotate and edit image data handled by the image forming apparatus 100. The controller ASIC 208 stores the image data in the HDD 211, and transmits and receives the image data to and from the image processing ASIC 207. The main memory 209 is used as an image memory with which the controller ASIC 208 performs image processing. The HDD 211 is used for temporarily storing image data subjected to the image processing.

The I/O ASIC 210 is an external interface for providing additional functions to the image forming apparatus 100. For example, the I/O ASIC 210 includes interfaces such as a network interface, a Universal Serial Bus (USB), a Secure Digital (SD) card, a Serial Peripheral Interface (SPI), and an Inter Integrated Circuit (I2C), a hardware accelerator for accelerating image processing, and an encryption processing circuit.

Note that the plotter 120 is not limited to the above-described plotter using the electrophotographic scheme to form an image, and may be a plotter that forms an image using an inkjet scheme. The image forming apparatus 100 is not limited to an MFP having at least two functions among a copy function, a printer function, a scanner function, and a facsimile function, and may be any apparatus that forms an image such as a copier, a scanner, or a facsimile machine. The image forming apparatus 100 may be, for example, a printer that receives image data generated by a separate image reading device by communication and prints the received image data.

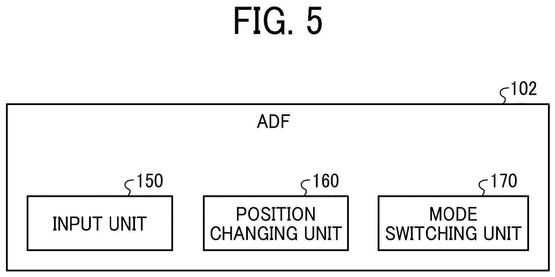

FIG. 5 is a diagram illustrating an example of functional blocks of the ADF 102 according to the first embodiment.

Functions related to the present embodiment will be described among the functions exerted by the ADF 102.

As illustrated in FIG. 5, the ADF 102 includes an input unit 150, a position changing unit 160, and a mode switching unit 170. These functional units may be implemented by the image processing ASIC 207 or the controller ASIC 208, or by execution of a program by the CPU 201.

The input unit 150 receives a switching operation performed by the user on an operation member as an operation interface (described later) of the ADF 102.

The position changing unit 160 changes the position of the movable document table 41 (stacking portion) back and forth between a first position and a second position different from the first position. The first position is a position where a document placed on the movable document table 41 is feedable (suppliable) by the document feeding mechanism (feeder) described above. The first position is a position where the movable document table 41 is raised in the direction a in FIG. 3. In this case, since the end of the document is nipped and fixed between the pickup roller 61 and the movable document table 41, it is difficult to move the document to adjust the position of the document.

The second position is a position where the document placed on the movable document table 41 is not feedable (suppliable) by the feeder. The second position is a position where the movable document table 41 is lowered in the direction b in FIG. 3. In this case, since the end of the document is not in contact with the pickup roller 61, it is easy to move the document to adjust the position of the document.

The mode switching unit 170 switches a mode (position changing mode) in which the position changing unit 160 changes the position of the movable document table 41, based on the switching operation received by the input unit 150. In the present embodiment, the position changing mode includes a first mode and a second mode. Thus, the position changing unit 160 changes the position of the movable document table 41 in accordance with the first mode or the second mode.

The first mode is a mode in which the position changing unit 160 changes the position of the movable document table 41 from the second position to the first position in response to placement of a document on the movable document table 41. The second mode is a mode in which the position changing unit 160 changes the position of the movable document table 41 from the second position to the first position in response to reception of an operation for starting conveyance of the document (conveyance start operation) from the user. The conveyance start operation is, for example, an operation of pressing a scan start button or a copy start button on the operation panel 29 of the scanner 101.

In the first mode, after the placement of a document, the movable document table 41 is quickly moved to the first position where the document is feedable. This can reduce the time from the conveyance start operation to the start of conveyance. However, when the movable document table 41 is at the first position, since it is difficult to move the document, it is not easy to adjust the position of the placed document.

In the second mode, the movable document table 41 stays at the second position where the document is not feedable after the placement of a document. Thus, the position of the placed document is adjustable until the conveyance start operation is received.

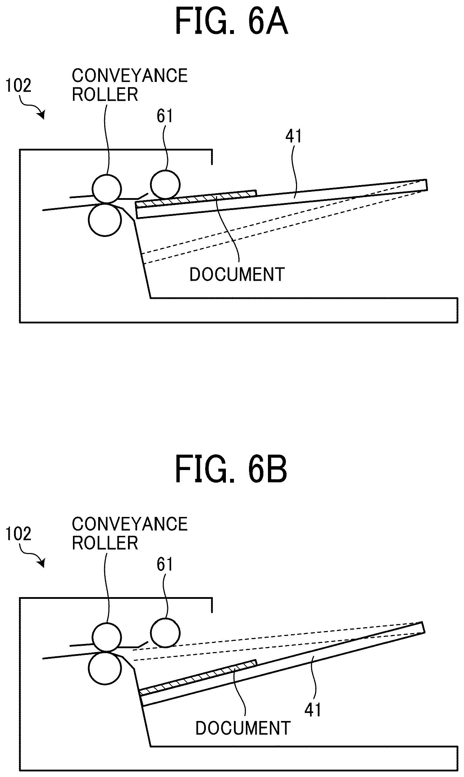

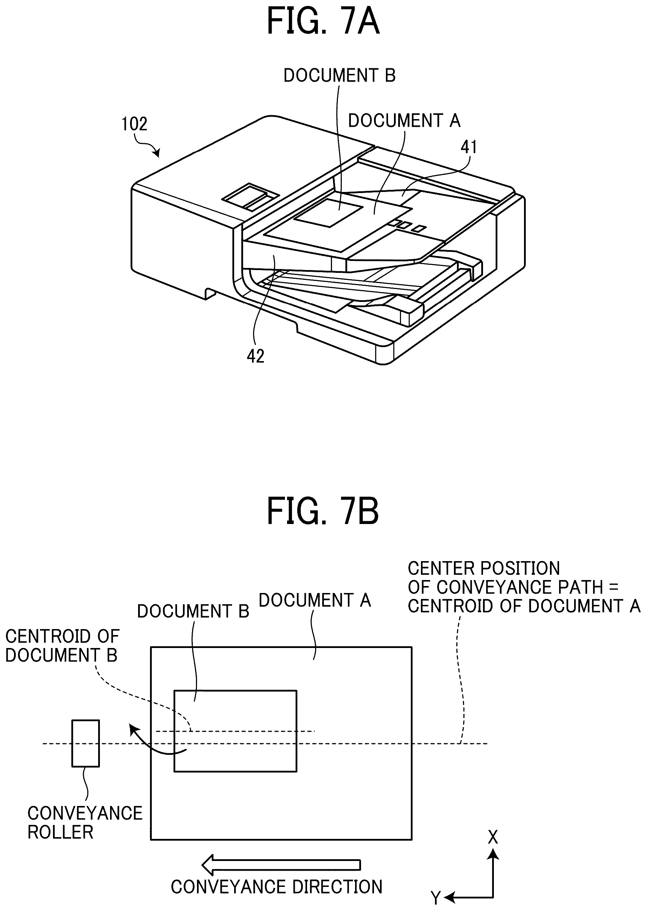

Effects of the present embodiment will be described next with reference to FIGs. 6A, 6B, 7A, and 7B.

FIGs. 6A and 6B are cross-sectional views of the ADF 102 as viewed from a side. FIG. 6A illustrates an example of the first mode in which the movable document table 41 is raised to the first position in response to placement of a document on the movable document table 41. In this case, since the document is nipped by the pickup roller 61 for standby, feeding of the document can be favorably started immediately after the conveyance start operation but it is difficult to adjust the position of the placed document as described above.

FIG. 6B illustrates an example of the second mode in which the movable document table 41 stays at the second position when a document is placed on the movable document table 41. In this case, since the document is not nipped between the movable document table 41 and the pickup roller 61, it is easy to adjust the position of the document after placement of the document as described above.

FIG. 7A and 7B are diagrams illustrating an example in which multiple different-sized documents are placed on the movable document table 41. FIG. 7A is an external view of the ADF 102 as viewed obliquely from above. In FIG. 7A, a document A and a document B having different sizes are placed on the movable document table 41. FIG. 7B is a view of the placed documents A and B as viewed directly from above. In FIG. 7B, an X direction indicates the main-scanning direction, and a Y direction indicates the conveyance direction.

As illustrated in FIG. 7B, the document A having a larger width is regulated by the side guide plates 42 such that the centroid of the document A in the X direction is at the center position of the conveyance path. In contrast, the document B having a smaller width is not regulated by the side guide plates 42. Thus, the centroid of the document B in the X direction may be shifted from the center position of the conveyance path. When the document B reaches the position of the conveyance roller with the centroid of the document B in the X direction being shifted from the center position of the conveyance path, the document B receives a rotation action represented by arrow in FIG. 7B. This is because the force of drawing the document B by the conveyance roller differs between +X side and -X side of the centroid of the document B. The document B is prone to be skewed because of this rotation action.

Thus, to prevent or reduce skewing of the document B having a smaller width during conveyance, a positional relationship between the centroid of the document B in the X direction and the conveyance roller is to be adjusted. When multiple placed documents have the same width but have different lengths, the positional adjustment may be desirably performed such that the end of a shorter document on the downstream side of the conveyance path is located in the vicinity of the pickup roller 61. As described above, when multiple different-sized documents are placed, the positions of the documents are to be adjusted. Thus, it is desirable to easily select the second mode at the time of placement of the documents.

When a user scans or copies documents, the user often places the documents in their hand onto the movable document table 41 before operating the operation panel 29. Thus, it is preferable to switch the position changing mode before the documents are placed or at the same time as the placement of the documents. In the present embodiment, an operation member that receives a switching operation to the second mode is provided in the vicinity of the movable document table 41. This makes it easier to switch the position changing mode when documents are placed.

An example in which the sub-scanning sensor 90 is used as the operation member that receives a switching operation will be described next.

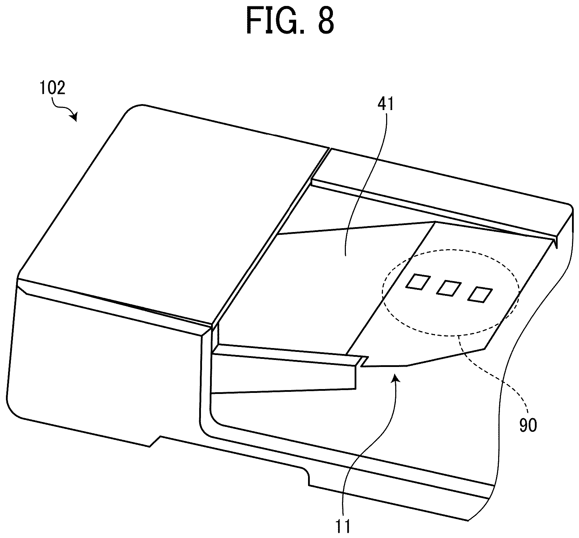

FIG. 8 is an external view of the ADF 102 as viewed obliquely from above. As illustrated in FIG. 8, the sub-scanning sensor 90 of the document tray 11 is disposed in the vicinity of the movable document table 41. In this example, the sub-scanning sensor 90 functions as the operation member that receives a switching operation.

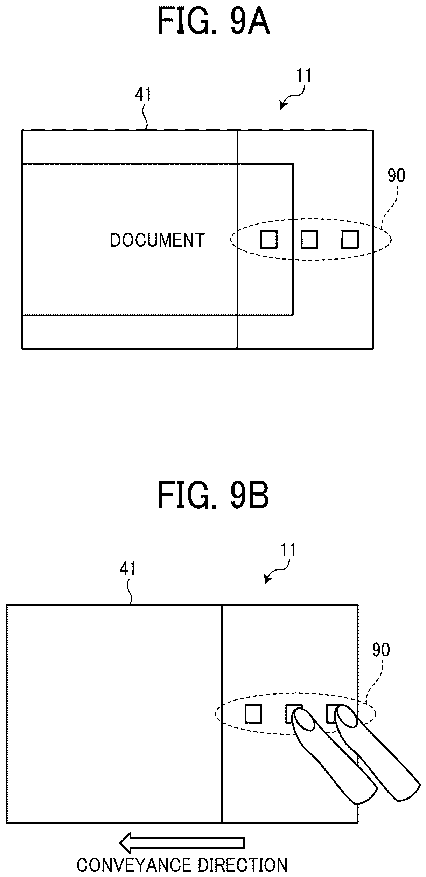

FIGs. 9A and 9B are views of the document tray 11 as viewed directly from above. As illustrated in FIG. 9A, when a document is placed on the movable document table 41, the document covers part or entirety of the sub-scanning sensor 90. The sub-scanning sensor 90 can detect a rough length of the document based on which sensor is covered by the document.

The switching operation is, for example, an operation of covering part of the sub-scanning sensor 90 with a finger or the like by the user. For example, as illustrated in FIG. 9B, the switching operation may be an operation of covering part of the sub-scanning sensor 90 on the upstream side in the conveyance direction with two fingers before the user places the document on the movable document table 41. When the current position changing mode is the first mode, the mode switching unit 170 switches the position changing mode to the second mode in response to the switching operation. When the current position changing mode is the second mode, the mode switching unit 170 switches the position changing mode to the first mode in response to the switching operation.

The switching operation may be an operation other than the above-described operation. For example, the switching operation may be an operation of covering each sensor of the sub-scanning sensor 90 sequentially from the upstream side to the downstream side in the conveyance direction or from the downstream side to the upstream side in the conveyance direction. The switching operation may be, for example, an operation of covering a most upstream sensor in the conveyance direction or an operation of double-clicking a specific sensor of the sub-scanning sensor 90.

The use of the sub-scanning sensor 90 as the operation member allows a switching operation to be performed by an action different from an ordinary action for placing documents, such as touching the sub-scanning sensor 90 with a finger. Thus, the user can perform the switching operation when placing multiple different-sized documents. The sub-scanning sensor 90 has a function of detecting the length of a document and a function of receiving the switching operation. This omits addition of parts or hardware for the switching operation and implements the function of receiving the switching operation at low cost.

The action used for the switching operation may be presented to the user in advance in a manual or the like, or presented to the user on a help screen displayed on the operation panel 29 or the like of the scanner 101.

An example in which the document presser 47 is used as the operation member that receives a switching operation will be described next.

FIGs. 10A and 10B are external views of the ADF 102 including the document presser 47, as viewed obliquely from above. When multiple different-sized documents are placed on the movable document table 41, a smaller document whose respective ends are not in contact with the side guide plates 42 is prone to be skewed during conveyance. The document presser 47 is a member that presses the placed documents from above to prevent or reduce such skewing.

The document presser 47 can be raised upward to be retracted as illustrated in FIG. 10A when the document presser 47 is not used such as when multiple documents having the same size are scanned. On the other hand, when multiple different-sized documents are placed on the movable document table 41, the document presser 47 is lowered to press the documents from above as illustrated in FIG. 10B. The document presser 47 has a roller on a surface thereof adjacent to the documents, allowing the documents to be slid and placed onto the movable document table 41 even in a lowered state. The document presser 47 is an example of a presser to press the conveyance target object.

In this example, the document presser 47 functions as the operation member that receives a switching operation. For example, an operation of lowering the document presser 47 can be regarded as the switching operation to the second mode. That is, when multiple different-sized documents are placed on the movable document table 41, the user lowers the document presser 47. In response to this operation, the mode switching unit 170 switches the position changing mode to the second mode when the current position changing mode is not the second mode. Whether the document presser 47 is in a raised state is detectable with a sensor provided in the vicinity of the document presser 47. For example, an optical sensor may be used to detect the position of the document presser 47 or a sensor may be used to detect the rotation of a drive shaft of the document presser 47.

As described above, when the position changing mode of the movable document table 41 shifts to the second mode, the movable document table 41 stays at the second position even after multiple different-sized documents are placed on the movable document table 41. Thus, it is easy to adjust the positions of the placed documents. On the other hand, when the document presser 47 is raised, the position changing mode shifts to the first mode and the movable document table 41 is moved to the first position in response to placement of the documents.

As described above, the position changing mode is linked to the position of the document presser 47. This allows the user to select the position changing mode in accordance with whether to place multiple different-sized documents without being conscious about the position changing mode. The document presser 47 has both the function of pressing documents and the function of receiving the switching operation. This omits addition of parts or hardware for the switching operation and implements the function of receiving the switching operation at low cost.

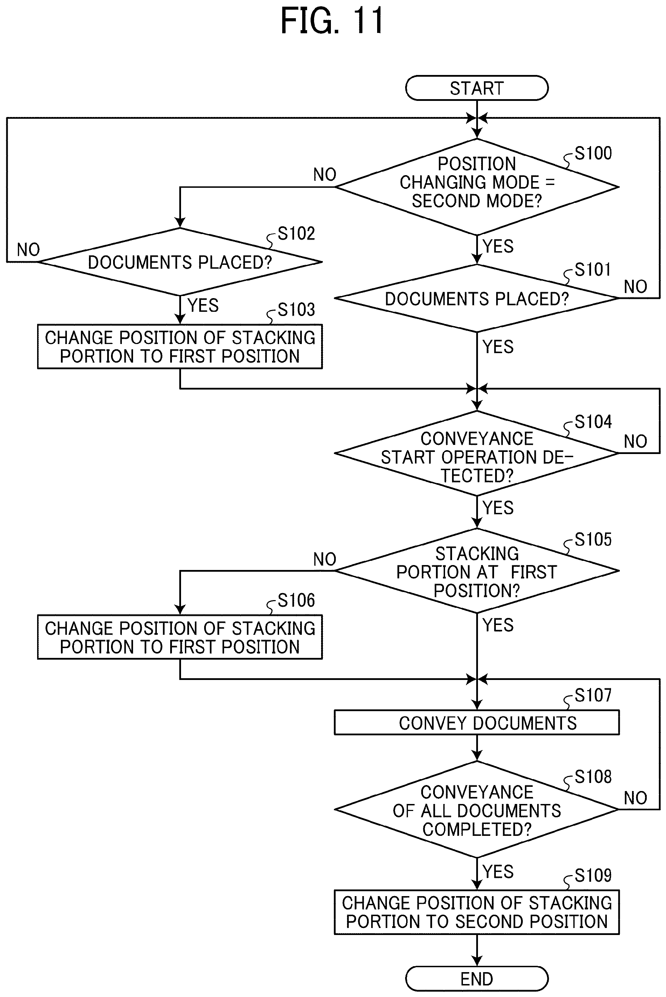

FIG. 11 is a flowchart illustrating an example of a procedure of a document conveyance process according to the first embodiment. In the present embodiment, when the ADF 102 is in a standby state, the stacking portion (i.e., the movable document table 41) is returned to the second position and the position changing mode is the first mode.

The input unit 150 checks an input for switching the position changing mode in step S100. If an input for changing the position changing mode to the second mode is received (Yes in step S100), the process proceeds to step S101. If documents are placed (Yes in step S101), the process proceeds to step S104. If no document is placed (No in step S101), the process returns to step S100, in which the input unit 150 checks an input for switching the position changing mode.

If no input for changing the position changing mode to the second mode is received (i.e., the position changing mode is the first mode) (No in step S100) and if documents are placed (Yes in step S102), the position changing unit 160 changes the position of the stacking portion to the first position in step S103. If no document is placed (No in step S102), the process returns to step S100, in which the input unit 150 checks an input for switching the position changing mode.

If a conveyance start operation is detected (Yes in step S104) and the stacking portion is at the first position (Yes in step S105), the ADF 102 conveys the documents in step S107. If the stacking portion is not at the first position (No in step S105), the position changing unit 160 changes the position of the stacking portion to the first position in step S 106 and the ADF 102 conveys the documents in step S107.

If the ADF 102 does not detect the conveyance start operation (No in step S104), the processing of step S104 is repeated.

After the conveyance of the documents is started, if the conveyance of all the documents is completed (Yes in step S108), the position changing unit 160 changes the position of the stacking portion to the second position in step S109. If the conveyance of all the documents is not completed (No in step S108), the ADF 102 continues the conveyance of the documents in step S107.

As described above, the present embodiment facilitates the placing work when documents (i.e., conveyance target objects) are placed on the stacking portion.

### Second Embodiment

A second embodiment will be described next.

In the second embodiment, to prevent a user from changing the position changing mode by mistake, the position changing mode is switched after a predetermined time elapses since reception of the switching operation from the user. Description of part of the second embodiment similar to that of the first embodiment will be omitted, and part of the second embodiment different from that of the first embodiment will be described below.

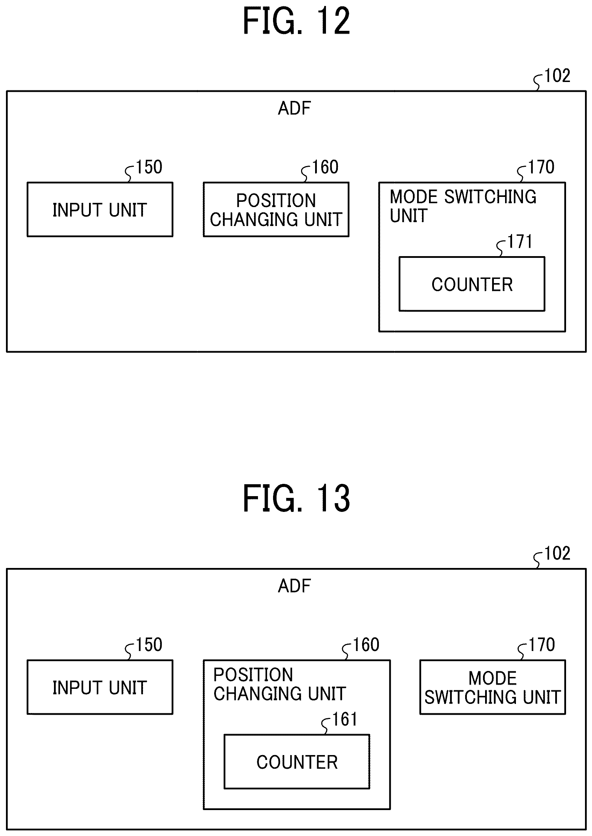

FIG. 12 is a diagram illustrating an example of functional blocks of the ADF 102 according to the second embodiment. A difference from FIG. 5 is that the mode switching unit 170 includes a counter 171.

The counter 171 counts an elapsed time after reception of the switching operation by the input unit 150. The mode switching unit 170 switches the position changing mode when the elapsed time counted by the counter 171 exceeds a predetermined time. The predetermined time is a time determined in advance based on an experiment or the like. The predetermined time is a time that allows the user to realize that the user has changed the position changing mode by mistake and to perform an operation for correcting the position changing mode to a desired mode, for example, 5 seconds or 10 seconds.

For example, when the user lowers the document presser 47, which is the operation member that receives a switching operation, by mistake, the position changing unit 160 does not move the movable document table 41 if the user raises the document presser 47 before the predetermined time elapses. This can prevent a time from being unnecessarily spent for moving the movable document table 41 due to an operation mistake and can increase the productivity.

As described above, the present embodiment facilitates the placing work when documents (i.e., conveyance target objects) are placed on the stacking portion. The position changing mode is switched after the predetermined time elapses after reception of the switching operation from the user. This can prevent the movable document table 41 from being moved unnecessarily by an operation mistake made by the user.

### Third Embodiment

A third embodiment will be described next.

In the third embodiment, the position of the movable document table 41 is changed from the second position to the first position in response to an elapse of a predetermined time after placement of documents on the movable document table 41 even when the position changing mode is the second mode. Description of part of the third embodiment similar to that of the first embodiment will be omitted, and part of the third embodiment different from that of the first embodiment will be described below.

When multiple different-sized documents are placed on the movable document table 41, the placed positions are to be adjusted. After the elapse of an expected adjustment time, the position of the movable document table 41 is quickly changed to the first position. This can increase the productivity.

FIG. 13 is a diagram illustrating an example of functional blocks of the ADF 102 according to the third embodiment. A difference from FIG. 5 is that the position changing unit 160 includes a counter 161.

The counter 161 counts an elapsed time after placement of documents on the movable document table 41. The position changing unit 160 changes the position of the movable document table 41 from the second position to the first position when the elapsed time counted by the counter 161 exceeds a predetermined time.

For example, when approximately 50 documents are placed at once, the experiment indicates that it takes approximately three minutes to complete the adjustment of the placed positions. Accordingly, when the aforementioned predetermined time is set to three minutes, the position of the movable document table 41 can be started to be changed to the first position at a timing when the adjustment of the placed positions is completed. The position of the movable document table 41 can be changed at an earlier timing than when the position is changed to the first position after the conveyance start operation is detected in the second mode. Thus, the timing of conveying the documents can be made earlier. The predetermined time is not limited to three minutes and may be a time other than three minutes.

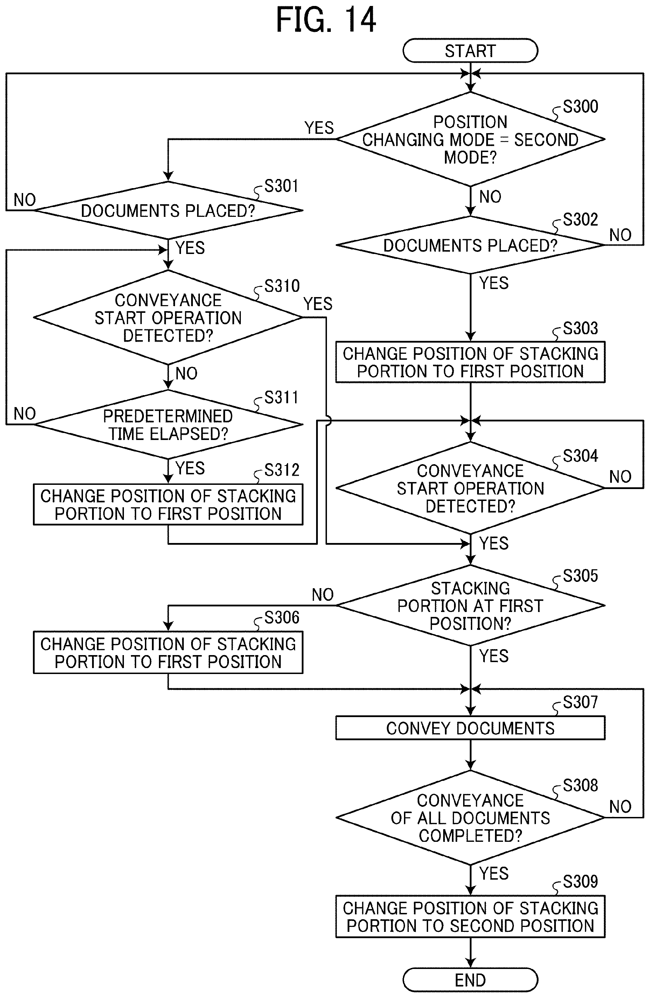

FIG. 14 is a flowchart illustrating an example of a procedure of a document conveyance process according to the third embodiment. Differences from FIG. 11 are that steps S310 to S312 are added. Since processing of steps S300 to S309 is substantially the same as the processing of steps S100 to S109 of FIG. 11, description thereof is omitted.

If documents are placed on the stacking portion (i.e., the movable document table 41) in the second mode (Yes in step S301), the process proceeds from step S301 to step S310. At this time, the counter 161 starts counting an elapsed time after the placement of the documents. If the conveyance start operation is detected (Yes in step S310), the process proceeds to step S305.

If the conveyance start operation is not detected (No in step S310), the position changing unit 160 compares the elapsed time after the placement of the documents counted by the counter 161 with the predetermined time in step S311. When the elapsed time exceeds the predetermined time (Yes in step S311), the position changing unit 160 changes the position of the stacking portion to the first position in step S312. The process then proceeds to step S304. When the elapsed time does not exceed the predetermined time (No in step S311), the process returns to step S310.

As described above, the present embodiment facilitates the placing work when documents (i.e., conveyance target objects) are placed on the stacking portion. The position of the movable document table 41 is changed to the first position in response to an elapse of the predetermined time after the placement of multiple different-sized documents. This can make the start of conveyance of the documents earlier and increase the productivity while keeping the ease of adjusting the positions of the documents.

### Fourth Embodiment

A fourth embodiment will be described next.

In the fourth embodiment, the position of the movable document table 41 is changed from the second position to the first position in response to detection of a setting operation performed by a user after documents are placed on the movable document table 41 even when the position changing mode is the second mode. Description of part of the fourth embodiment similar to that of the first embodiment will be omitted, and part of the fourth embodiment different from that of the first embodiment will be described below.

After placing documents on the movable document table 41, the user operates the operation panel 29 to set a read image quality, a resolution, a size, etc. In the present embodiment, the position of the movable document table 41 is changed to the first position at detection of the setting operation on the operation panel 29 even if the position changing mode has been switched to the second mode. The position of the movable document table 41 is set at the first position before the user performs the conveyance start operation, so that the conveyance start timing can be made earlier.

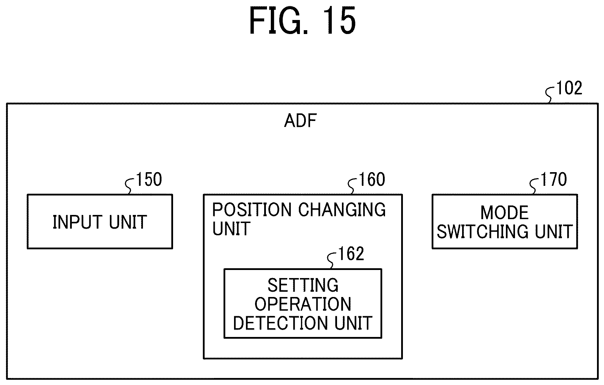

FIG. 15 is a diagram illustrating an example of functional blocks of the ADF 102 according to the fourth embodiment. A difference from FIG. 5 is that the position changing unit 160 includes a setting operation detection unit 162.

The setting operation detection unit 162 detects a setting operation on the operation panel 29. The position changing unit 160 changes the position of the movable document table 41 from the second position to the first position when documents are placed on the movable document table 41 and the setting operation is detected by the setting operation detection unit 162.

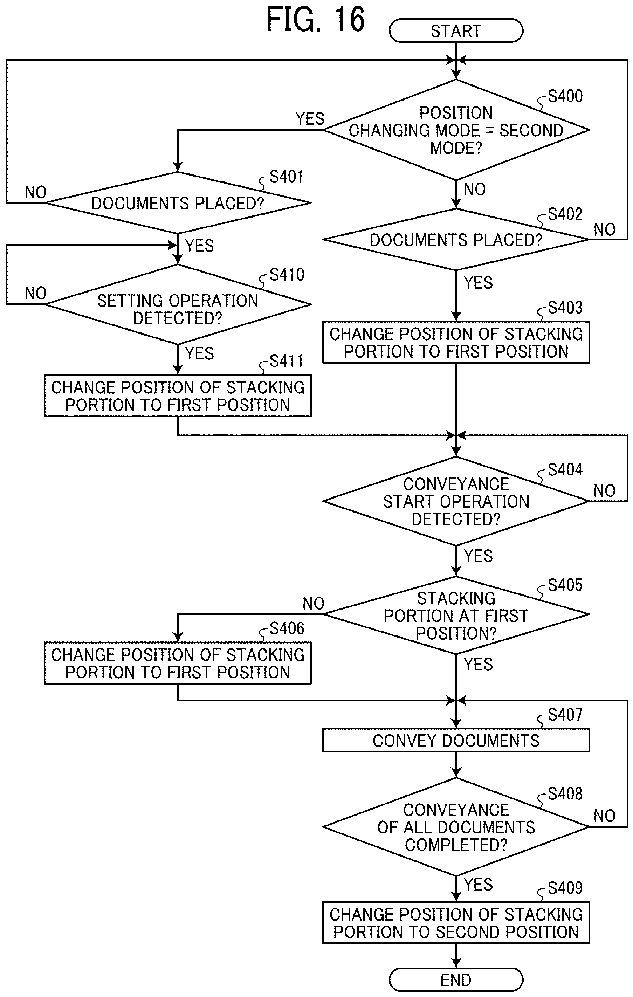

FIG. 16 is a flowchart illustrating an example of a procedure of a document conveyance process according to the fourth embodiment. Differences from FIG. 11 are that steps S410 and S411 are added. Since processing of steps S400 to S409 is substantially the same as the processing of steps S100 to S109 of FIG. 11, description thereof is omitted.

If documents are placed on the stacking portion (i.e., the movable document table 41) in the second mode (Yes in step S401), the process proceeds to step S410. If the setting operation detection unit 162 detects a setting operation on the operation panel 29 (Yes in step S410), the position changing unit 160 changes the position of the stacking portion to the first position in step S411. The process then proceeds to step S404.

If the setting operation detection unit 162 does not detect any setting operation on the operation panel 29 (No in step S410), the processing in step S410 is repeated.

As described above, the present embodiment facilitates the placing work when documents (i.e., conveyance target objects) are placed on the stacking portion. The position of the movable document table 41 is changed to the first position in response to detection of a user setting operation after placement of multiple different-sized documents. This can make the start of conveyance of the documents earlier and increase the productivity while keeping the ease of adjusting the positions of the documents.

### Fifth Embodiment

A fifth embodiment will be described next.

In the fifth embodiment, a read image obtained by the image reading device according to the first to fourth embodiments is corrected or a document image is clipped from the read image. Description of part of the fifth embodiment similar to those of the first to fourth embodiments will be omitted, and part of the fifth embodiment different from those of the first to fourth embodiments will be described below.

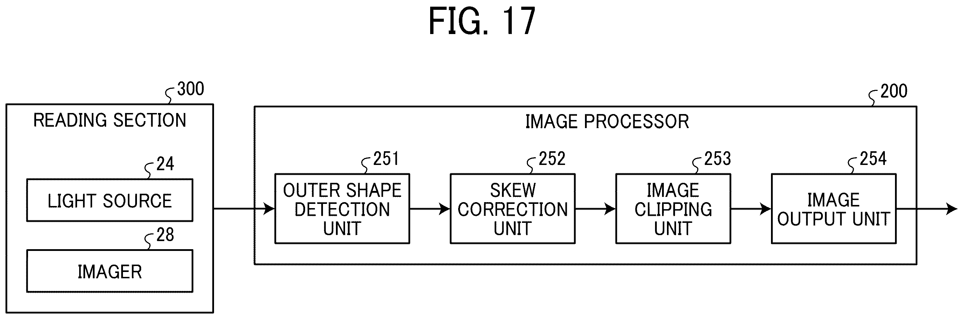

FIG. 17 is a diagram schematically illustrating an example of a configuration for performing image processing according to the fifth embodiment. A reading section 300 illustrated in FIG. 17 includes the light source 24 and the imager 28 described in FIG. 2. The reading section 300 irradiates a conveyance target object with visible light from the light source 24, receives reflected light from the conveyance target object with the imager 28, and outputs a visible image (e.g., an RGB image) as a read image. The light source 24 is an example of a visible light source. The imager 28 is an example of a visible light sensor.

As illustrated in FIG. 17, the image processor 200 includes an outer shape detection unit 251, a skew correction unit 252, an image clipping unit 253, and an image output unit 254.

The outer shape detection unit 251 detects outer shape information such as a tilt and a size of a conveyance target object (document) from an input read image. More specifically, the outer shape detection unit 251 detects a boundary (edge) between a background portion and a document portion of the read image to detect the tilt of the document from a tilt of the edge and the size of the document from a size of an edge area.

The skew correction unit 252 performs tilt correction processing for correcting the tilt of the document, based on the outer shape information detected by the outer shape detection unit 251.

The image clipping unit 253 performs clipping processing for clipping a document image (an image of a read document area in the read image) from the tilt-corrected read image, based on the outer shape information detected by the outer shape detection unit 251.

The image output unit 254 outputs the document image clipped and generated by the image clipping unit 253. The image processor 200 may generate an image by performing at least one of the tilt correction processing on the read image and the document image clipping processing. That is, the image processor 200 may include both the skew correction unit 252 and the image clipping unit 253 or includes at least one of the skew correction unit 252 and the image clipping unit 253. The image output unit 254 may output at least one of the image obtained by correcting the tilt of the read image, the document image clipped from the read image, and the document image clipped from the tilt-corrected read image.

As described above, the present embodiment facilitates the placing work when documents (i.e., conveyance target objects) are placed on the stacking portion. Even when multiple different-sized documents are placed, an image obtained by correcting the tilt of a document by document tilt correction can be output, and an image having a reduced data amount by the document image clipping processing can be output.

### Sixth Embodiment

A sixth embodiment will be described next.

The sixth embodiment differs from the fifth embodiment in that the reading section 300 includes a visible image reading unit 300A and an invisible image reading unit 300B. Description of part of the sixth embodiment similar to that of the fifth embodiment will be omitted, and part of the sixth embodiment different from that of the fifth embodiment will be described below.

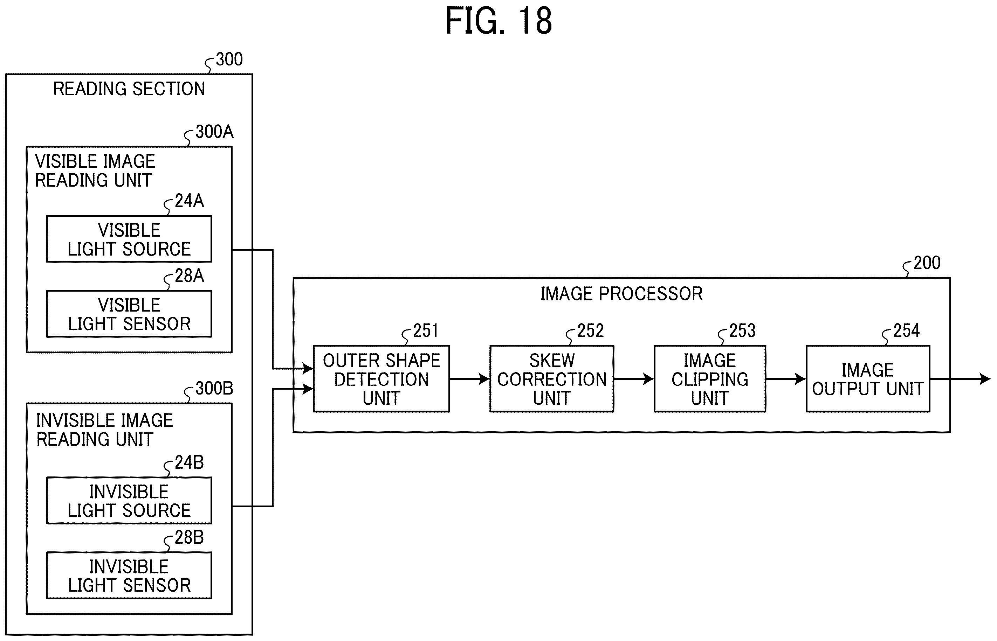

FIG. 18 is a diagram schematically illustrating an example of a configuration for performing image correction processing according to the sixth embodiment. Differences from FIG. 17 are that the reading section 300 includes the visible image reading unit 300A and the invisible image reading unit 300B and that the outer shape detection unit 251 of the image processor 200 detects outer shape information using an image read by the invisible image reading unit 300B in addition to an image read by the visible image reading unit 300A.

The visible image reading unit 300A includes a visible light source 24A and a visible light sensor 28A that receives reflected light of visible light emitted to a conveyance target object and outputs a resultant image. The invisible image reading unit 300B includes an invisible light source 24B and an invisible light sensor 28B that receives reflected light of near-infrared light emitted to the conveyance target object and outputs a resultant image. The invisible light sensor 28B is sensitive to invisible light and has a sensitivity peak at around 850 nm, for example. In the present embodiment, the image output from the visible image reading unit 300A is called a visible image, whereas the image output from the invisible image reading unit 300B is called an invisible image.

The reading section 300 illustrated in FIG. 18 includes the visible light source 24A and the invisible light source 24B that are separate from each other but may include a single light source that emits both visible light and invisible light. The reading section 300 illustrated in FIG. 18 includes the visible light sensor 28A and the invisible light sensor 28B that are separate from each other but may include a single image sensor that outputs a visible image and an invisible image.

In the visible image reading unit 300A, the visible light source 24A irradiates a conveyance target object with light, and the visible light sensor 28A receives reflected light from the conveyance target object to output a visible image (e.g., an RGB image). In the invisible image reading unit 300B, the invisible light source 24B irradiates the same conveyance target object with light, and the invisible light sensor 28B receives reflected light from the conveyance target object to output an invisible image (e.g., a near-infrared (NIR) image).

The reading section 300 can obtain both the visible image and the invisible image at the same time from the same conveyance target object through reading. The reading section 300 does not necessarily obtain both the visible image and the invisible image at the same time from the same conveyance target object through reading, and may read the conveyance target object at different timings as long as the positions of the conveyance target object match.

The outer shape detection unit 251 illustrated in FIG. 18 detects outer shape information such as a tilt and a size of a conveyance target object (document) from an input visible image and an input invisible image. Depending on the background and the type of the document, the edge may be detected more accurately when the invisible image is used than when the visible image is used. Thus, in the present embodiment, the outer shape detection unit 251 adaptively uses the visible image and the invisible image to detect the outer shape information.

For example, the outer shape detection unit 251 may generate first derivative images of the visible image and the invisible image and detects areas where a pixel value of the first derivative images is greater than a predetermined threshold value. The outer shape detection unit 251 detects the edge using the visible image when the area detected from the visible image is larger, and detects the edge using the invisible image when the area detected from the invisible image is larger. When the areas detected from the visible image and the invisible image have substantially the same size, the outer shape detection unit 251 detects the edge using both the visible image and the invisible image.

The skew correction unit 252 performs tilt correction processing for correcting the tilt of the document in at least one of the visible image and the invisible image, based on the outer shape information detected by the outer shape detection unit 251.

The image clipping unit 253 performs clipping processing for clipping a document image from at least one of the tilt-corrected visible image and the tilt-corrected invisible image, based on the outer shape information detected by the outer shape detection unit 251. The image clipping unit 253 may perform clipping processing for clipping a document image from at least one of the visible image and the invisible image before tilt correction.

The image output unit 254 may output at least one of the image obtained by correcting the tilt of the visible image or the invisible image, the document image clipped from the visible image or the invisible image, and the document image clipped from the tilt-corrected visible image or the tilt-corrected invisible image. The image output unit 254 may output at least one of the images obtained by correcting the tilt of the visible image and the invisible image, the document images clipped from the visible image and the invisible image, and the document images clipped from the tilt-corrected visible image and the tilt-corrected invisible image.

As described above, the present embodiment facilitates the placing work when documents (i.e., conveyance target objects) are placed on the stacking portion. The visible image and the invisible image are adaptively used, so that the outer shape information of the document can be detected more accurately and the accuracy of tilt correction and the accuracy of clipping can be increased.

A conveying device (102) includes a stacker (41), a conveyor (41), a feeder (61, 62, 63), an operation interface (90), an actuator (41a), and a mode switching unit (170). The stacker (41) stacks an object to be conveyed. The conveyor (50) conveys the object in a conveyance direction. The feeder (61, 62, 63) feeds the object on the stacker (41) to the conveyor (50). The operation interface (90) is disposed in vicinity of the stacker (41) to receive a switching operation to move the stacker (41). The actuator (41a) moves), in response to a receipt of the switching operation by the operation interface (90), the stacker between: a first position where the object on the stacker (41) is at a feedable position (61, 62, 63) by the feeder; and a second position where the object on the stacker (41) is at a non-feedable position by the feeder, the non-feedable position below the first position. The mode switching unit (170) is configured to perform the switching operation, in response to the receipt of the switching operation by the operation interface (90), to switch a mode of the actuator between: a first mode to move the stacker (41) from the second position to the first position when the object is stacked on the stacker (41); and a second mode to move the stacker (41) from the second position to the first position when the operation interface (90) receives starting of conveying the object.

The operation interface (47, 90) includes a sensor (90) to detect a length of the object stacked on the stacker (41) in the conveyance direction.

The operation interface (47, 90) includes a presser (47) to press the object stacked on the stacker (41).

The conveying device (102) further includes a counter (170) to count an elapsed time elapsed after the operation interface receives the switching operation. The mode switching unit (170) is configured to switch the mode when the elapsed time counted by the counter 171 exceeds a predetermined time.
The conveying device (102) further includes a counter (160) to count an elapsed time elapsed after the operation interface receives the switching operation. The position changing unit (160) is configured to, in the second mode, cause the actuator to move the stacker (41) from the second position to the first position when the elapsed time exceeds a predetermined time.

The conveying device (102) further includes a setting operation detection unit (162) configured to detect the setting operation. The position changing unit (160) is further configured to cause the actuator to move the stacker (41) from the second position to the first position in the second mode in response to the placement of the object on the stacker (41); and detection of the setting operation by the setting operation detection unit (162).

An image reading device (101, 102, 200) includes the conveying device (102) described above; a visible light source (24, 24A) to emit visible light to the object conveyed by the conveying device (102); a visible light sensor (28, 28A) to detect reflection visible light reflected from the object and generate and output a read image of the object based on the reflection visible light; and an image processor (200) configured to: detect outer shape information of the object from the read image output from the visible light sensor (28, 28A); and perform at least one of skew correction on the read image based on the outer shape information to generate a tilt-corrected image; or clipping of an image of the object from the read image or the tilt-corrected image; and generate and output an output image based on at least one of the skew correction or the clipping of the image.

An image reading device includes the conveying device (102) described above; a visible light source (24A) to emit visible light to the object conveyed by the conveying device (102); an invisible light source (24B) to emit invisible light to the object conveyed by the conveying device (102); a visible light sensor (28A) to detect reflection visible light reflected from the object and generate and output a visible read image of the object based on the reflection visible light; and an invisible light sensor (28B) to detect reflection invisible light reflected from the object and generate and output an invisible read image of the object based on the reflection invisible light. The circuitry is further configured to detect outer shape information of the object from at least one of the visible read image or the invisible read image; perform skew correction, based on the outer shape information, on at least one of the visible read image or the invisible read image; and clipping of an image from the visible read image or the invisible read image; and generate and output an output image based on at least one of the skew correction or the clipping of the image.

An image forming apparatus (100) includes the image reading device described above; and an image forming device to form an image, based on the image generated by the circuitry.

A conveying method to be executed by a conveying device, includes performing a switching operation (S100, S300, S400), in response to a receipt of the switching operation by an operation interface (90) disposed in vicinity of a stacker (41), to switch a mode of an actuator that moves the stacker, between: a first mode to move the stacker (41) from a second position to a first position when the object is stacked on the stacker (41); and a second mode to move the stacker (41) from the second position to the first position when the operation interface (90) receives starting of conveying the object. The first position is where the object on the stacker (41) is at a feedable position (61, 62, 63) by a feeder; and the second position is where the object on the stacker (41) is at a non-feedable position by the feeder, the non-feedable position below the first position.

The program executed by the conveying device and the image reading device according to each of the embodiments described above is recorded on and provided through a non-transitory computer-readable recording medium such as a CD-ROM, an FD, a CD-R, or a DVD, in an installable or executable file format.

The program executed by the conveying device and the image reading device according to each of the embodiments may be stored on a computer connected to a network such as the Internet, and downloaded and thus provided via the network. The program executed by the conveying device and the image reading device according to each of the embodiments may be provided or distributed via a network such as the Internet.

The program according to each of the embodiments may be preinstalled in the ROM or the like and thus provided.

The program executed by the conveying device and the image reading device according to each of the embodiments has a module configuration including the above-described units (such as the input unit 150, the position changing unit 160, and the mode switching unit 170). The CPU (processor) that is actual hardware reads the program from the recording medium and executes the program, so that the above-described units are loaded to a main storage device and are generated in the main storage device.

Each of the functions of any one of the above-described embodiments can be implemented by one or more processing circuits or circuitry. As used herein, the term "processing circuit or circuitry" includes processors programmed to implement each function by software, such as a processor implemented by an electronic circuit, and devices designed to implement the functions described above, such as an application-specific integrated circuit (ASIC), a digital signal processor (DSP), a field programmable gate array (FPGA), and existing circuit modules.

Although some embodiments of the present disclosure have been described above, the above-described embodiments are presented as examples and are not intended to limit the scope of the present disclosure. Such novel embodiments may be carried out in various other modified forms. Various omissions, substitutions, and changes may be made without departing from the gist of the present disclosure. Such novel embodiments and modifications thereof are within the scope and gist of the present disclosure and are also within the scope of the claims and the equivalent thereof. The elements of different embodiments or modifications may be combined with each other as appropriate.

Aspects of the present disclosure are, for example, as follows.

According to Aspect 1, a conveying device includes a stacking portion, a conveyor, a feeder, a position changing unit, a mode switching unit, and an operation member. On the stacking portion, a conveyance target object is placed. The conveyor conveys the conveyance target object. The feeder feeds the conveyance target object. The position changing unit changes a position of the stacking portion back and forth between a first position and a second position different from the first position. The first position is a position where the conveyance target object placed on the stacking portion is feedable by the feeder. The second position is a position where the conveyance target object placed on the stacking portion is not feedable by the feeder. The mode switching unit switches a mode in which the position changing unit changes the position of the stacking portion, based on a switching operation by a user. The operation member is disposed in the vicinity of the stacking portion to receive the switching operation. The mode switching unit switches the mode to either a first mode in which the position of the stacking portion is changed from the second position to the first position in response to placement of the conveyance target object on the stacking portion, or a second mode in which the position of the stacking portion is changed from the second position to the first position in response to reception of an operation to start conveying the conveyance target object from the user.

According to Aspect 2, in the conveying device of Aspect 1, the operation member includes a sensor to detect a length of the conveyance target object placed on the stacking portion.

According to Aspect 3, in the conveying device of Aspect 1, the operation member includes a presser to press the conveyance target object placed on the stacking portion.

According to Aspect 4, in the conveying device of any one of Aspects 1 to 3, the mode switching unit switches the mode of the position changing unit after an elapse of a predetermined time after reception of the switching operation from the user.

According to Aspect 5, in the conveying device of any one of Aspects 1 to 4, the position changing unit changes, in the second mode, the position of the stacking portion from the second position to the first position in response to an elapse of a predetermined time after the placement of the conveyance target object on the stacking portion.

According to Aspect 6, in the conveying device of any one of Aspects 1 to 4, the position changing unit changes, in the second mode, the position of the stacking portion from the second position to the first position in response to the placement of the conveyance target object on the stacking portion and detection of a setting operation by the user.

According to Aspect 7, an image reading device includes a visible light source, a visible light sensor, an image processor, and the conveying device of any one of Aspects 1 to 6. The visible light source irradiates a conveyance target object with visible light. The visible light sensor detects the visible light. The image processor detects outer shape information of the conveyance target object from a read image of the conveyance target object. The read image is obtained based on an output from the visible light sensor. The image processor generates an image obtained by performing at least one of skew correction on the read image using the outer shape information and clipping of an image of the conveyance target object.

According to Aspect 8, an image reading device includes a visible light source, an invisible light source, a visible light sensor, an invisible light sensor, an image processor, and the conveying device of any one of Aspects 1 to 6. The visible light source irradiates a conveyance target object with visible light. The invisible light source irradiates the conveyance target object with invisible light. The visible light sensor detects the visible light. The invisible light sensor detects the invisible light. The image processor detects outer shape information of the conveyance target object from at least one of a visible image and an invisible image. The visible image is a read image of the conveyance target object obtained based on an output from the visible light sensor. The invisible image is a read image of the conveyance target object obtained based on an output from the invisible light sensor. The image processor generates an image obtained by performing at least one of skew correction on the visible image or the invisible image using the outer shape information and clipping of an image of the conveyance target object from the visible image or the invisible image.

According to Aspect 9, an image forming apparatus includes the image reading device of Aspect 7, and an image forming device. The image forming device forms an image, based on the image generated by the image processor.

According to Aspect 10, a conveying method is to be executed by a conveying device. The conveying device includes a stacking portion on which a conveyance target object is placed, a conveyor to convey the conveyance target object, a feeder to feed the conveyance target object, and an operation member disposed in the vicinity of the stacking portion to receive a switching operation from a user. The conveying method includes: changing a position of the stacking portion back and forth between a first position and a second position different from the first position, the first position being a position where the conveyance target object placed on the stacking portion is feedable by the feeder, the second position being a position where the conveyance target object placed on the stacking portion is not feedable by the feeder; and switching a mode in which the position of the stacking portion is changed in the changing of the position, based on the switching operation. In the switching of the mode, the mode is switched to either a first mode in which the position of the stacking portion is changed from the second position to the first position in response to placement of the conveyance target object on the stacking portion, or a second mode in which the position of the stacking portion is changed from the second position to the first position in response to reception of an operation to start conveying the conveyance target object from the user.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A conveying device (102) comprising:
a stacker (41) to stack an object to be conveyed;
a conveyor (50) to convey the object in a conveyance direction;
a feeder (61, 62, 63) to feed the object on the stacker (41) to the conveyor (50);
an operation interface (90) disposed in vicinity of the stacker (41) to receive a switching operation to move the stacker (41);
an actuator (41a), in response to a receipt of the switching operation by the operation interface (90), to move the stacker between:
a first position where the object on the stacker (41) is at a feedable position (61, 62, 63) by the feeder; and
a second position where the object on the stacker (41) is at a non-feedable position by the feeder, the non-feedable position below the first position; and
a mode switching unit (170) configured to perform the switching operation, in response to the receipt of the switching operation by the operation interface (90), to switch a mode of the actuator between:
a first mode to move the stacker (41) from the second position to the first position when the object is stacked on the stacker (41); and
a second mode to move the stacker (41) from the second position to the first position when the operation interface (90) receives starting of conveying the object.

2. The conveying device (102) according to claim 1, wherein:
the operation interface (47, 90) includes a sensor (90) to detect a length of the object stacked on the stacker (41) in the conveyance direction.

3. The conveying device (102) according to claim 1, wherein:
the operation interface (47, 90) includes a presser (47) to press the object stacked on the stacker (41).

4. The conveying device (102) according to any one of claims 1 to 3, further comprising a counter (170) to count an elapsed time elapsed after the operation interface receives the switching operation, wherein:
the mode switching unit (170) is configured to switch the mode when the elapsed time counted by the counter 171 exceeds a predetermined time.

5. The conveying device (102) according to any one of claims 1 to 4, further comprising a counter (160) to count an elapsed time elapsed after the operation interface receives the switching operation, wherein:
the position changing unit (160) is configured to, in the second mode:
cause the actuator to move the stacker (41) from the second position to the first position when the elapsed time exceeds a predetermined time.

6. The conveying device (102) according to any one of claims 1 to 4, comprising:
a setting operation detection unit (162) configured to detect the setting operation, wherein:
the position changing unit (160) is further configured to cause the actuator to move the stacker (41) from the second position to the first position in the second mode in response to:
placement of the object on the stacker (41); and
detection of the setting operation by the setting operation detection unit (162).

7. An image reading device (101, 102, 200) comprising:
the conveying device (102) according to any one of claims 1 to 6;
a visible light source (24, 24A) to emit visible light to the object conveyed by the conveying device (102);
a visible light sensor (28, 28A) to:
detect reflection visible light reflected from the object; and
generate and output a read image of the object based on the reflection visible light; and
an image processor (200) configured to:
detect outer shape information of the object from the read image output from the visible light sensor (28, 28A); and
perform at least one of:
skew correction on the read image based on the outer shape information to generate a tilt-corrected image; or
clipping of an image of the object from the read image or the tilt-corrected image; and
generate and output an output image based on at least one of the skew correction or the clipping of the image.

8. An image reading device comprising:
the conveying device (102) according to claim 1;
a visible light source (24A) to emit visible light to the object conveyed by the conveying device (102);
an invisible light source (24B) to emit invisible light to the object conveyed by the conveying device (102);
a visible light sensor (28A) to:
detect reflection visible light reflected from the object; and
generate and output a visible read image of the object based on the reflection visible light; and
an invisible light sensor (28B) to:
detect reflection invisible light reflected from the object; and
generate and output an invisible read image of the object based on the reflection invisible light, wherein:
the circuitry is further configured to:
detect outer shape information of the object from at least one of:
the visible read image; or
the invisible read image;
perform:
skew correction, based on the outer shape information, on at least one of:
the visible read image; or
the invisible read image; and
clipping of an image from:
the visible read image; or
the invisible read image; and
generate and output an output image based on at least one of the skew correction or the clipping of the image.

9. An image forming apparatus (100) comprising:
the image reading device (101, 102, 200) according to claim 7; and
an image forming device (120) to form an image, based on the image generated by the image processor (200).

10. A conveying method to be executed by a conveying device, the conveying method comprising:
performing a switching operation (S100, S300, S400), in response to a receipt of the switching operation by an operation interface (90) disposed in vicinity of a stacker (41), to switch a mode of an actuator that moves the stacker, between:
a first mode to move the stacker (41) from a second position to a first position when an object is stacked on the stacker (41); and
a second mode to move the stacker (41) from the second position to the first position when the operation interface (90) receives starting of conveying the object, wherein:
the first position is where the object on the stacker (41) is at a feedable position (61, 62, 63) by a feeder; and
the second position is where the object on the stacker (41) is at a non-feedable position by the feeder, the non-feedable position below the first position.
